# EUROPÄISCHE PATENTANMELDUNG

(11) **EP 0 618 435 A2**
(43) Veröffentlichungstag der Anmeldung: **05.10.1994**
(21) Anmeldenummer: 94103124.7
(22) Anmeldetag: 02.03.1994
(51) Int. Cl.: G01L 9/12, G01L 9/00, G01L 19/02

(54) **Kapazitiver Drucksensor**

(30) Priorität: 30.03.1993 DE 4310244
(71) Anmelder: SIEMENS AKTIENGESELLSCHAFT, D-80333 München (DE)
(72) Erfinder: Biebl, Markus, Dipl.-Phys., D-81543 München (DE); Scheiter, Thomas, Dipl.-Ing., D-80469 München (DE); Klose, Helmut, Dr.-Ing., D-81929 München (DE)

(57) **Zusammenfassung**

Drucksensor mit einer Matrix von Membranen (11, 12, 13, 14) aus Polysilizium, die über einer Struktur elektrischer Leiter an der Oberseite eines Siliziumsubstrates für die Bestimmung ihrer von der Druckbelastung abhängigen variablen elektrischen Kapazität angeordnet sind, wobei diese Membranen in mindestens zwei unterschiedlichen Größen vorhanden sind und jeweils so viele Kapazitäten dieser Membranen derselben Größe zu einer Untereinheit verbunden werden, daß die Grundkapazitäten dieser Untereinheiten jeweils gleich groß sind.

## Beschreibung

Die vorliegende Erfindung betrifft einen Drucksensor für die meßtechnische Erfassung von Druck über einen weiten Meßbereich.

Viele technische Anwendungen, wie z. B. in der Vakuumtechnologie, erfordern die meßtechnische Erfassung von Druck über einen mehrere Größenordnungen weiten Meßbereich mit hoher Genauigkeit. Konventionelle Drucksensoren weisen dagegen aufgrund ihrer technischen Auslegung einen sehr begrenzten Druckmeßbereich auf. Daher wurden bisher gleichzeitig mehrere einzelne Drucksensoren mit aneinander angrenzenden Meßbereichen eingesetzt. Daraus ergeben sich jedoch folgende Nachteile:
Da mehrere Sensoren benötigt werden, ist die Anordnung entsprechend aufwendiger. Die Ausgangssignale der Sensoren sind im allgemeinen nicht kompatibel zueinander und müssen deshalb in einer zusätzlichen externen elektronischen Schaltung, die erkennt, welcher der Sensoren gerade im zulässigen Meßbereich arbeitet, ausgewertet werden. Durch die geringe Überdruckkapazität herkömmlicher Drucksensoren ist der erzielbare Meßbereich stark eingeschränkt.

Aufgabe der vorliegenden Erfindung ist es, einen Drucksensor anzugeben, dessen Meßbereich bei gleichzeitig hoher Meßgenauigkeit ein Vielfaches größer ist als derjenige herkömmlicher Drucksensoren.

Diese Aufgabe wird mit dem Drucksensor mit den Merkmalen des Anspruches 1 gelöst. Weitere Ausgestaltungen ergeben sich aus den abhängigen Ansprüchen.

Der Drucksensor der vorliegenden Erfindung besteht aus einer Matrix von Drucksensoren verschiedener Membrangröße. Die elektrische Kapazität dieser Membranen gegenüber der Unterlage wird gemessen und daraus die Größe des Druckes bestimmt. Dabei sind jeweils so viele Drucksensoren gleicher Membrangröße und damit eines bestimmten Meßbereiches zu einer Untereinheit zusammengefaßt, daß die Summe der (kapazitiv wirksamen) Membranflächen in allen Untereinheiten gleich groß ist. Die Membranen in diesen Untereinheiten sind jeweils parallel geschaltet, so daß deren Kapazität sich summiert und daher in nicht ausgelenktem Zustand, d. h. bei normalem Druck, für alle Untereinheiten gleich groß ist. Die Membrangrößen in den verschiedenen Untereinheiten sind so gewählt, daß die Meßbereiche der Untereinheiten aneinander anschließen, so daß die Auswertung sich vereinfacht. Die Herstellung der einzelnen Membranen geschieht vorteilhaft in Prozessen, die mit der IC-Technologie kompatibel sind, wie z. B. Silicon-Micromachining.

Es folgt eine Beschreibung der erfindungsgemäßen Drucksensoren und deren Herstellung anhand der Figuren 1 bis 5.
- Fig. 1: zeigt einen erfindungsgemäßen Drucksensor in der Aufsicht.
- Fig. 2 bis 5: zeigen einen Ausschnitt eines erfindungsgemäßen Drucksensors im Querschnitt nach verschiedenen Schritten der Herstellung.

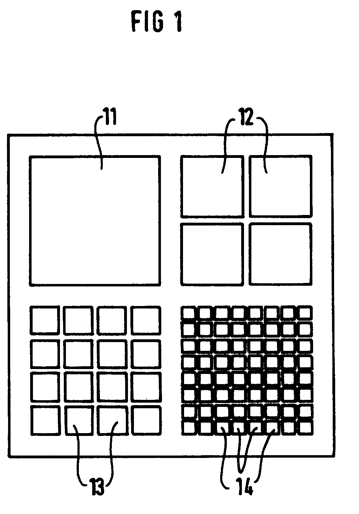

Die Wahl der Größe und Anzahl der einzelnen Membranen wird in Fig. 1 veranschaulicht. Der Einfachheit halber wird angenommen, daß die auf der Unterlage befestigten Ränder der Membranen gegenüber der Fläche vernachlässigbar sind, so daß die Kapazität im wesentlichen durch die Fläche der Membranen gegeben ist. In nicht ausgelenktem Zustand ist die Gesamtkapazität der parallel geschalteten Membranen proportional zu deren gesamter Fläche. Die Grundkapazität ist z. B. dann für alle Untereinheiten gleich groß, wenn diese Untereinheiten aus 2²ⁱ Membranen mit dem 2⁻²ⁱ-fachen einer Grundfläche zusammengesetzt sind, wobei i eine nicht negative ganze Zahl ist. Vier derartige im Quadrat zusammengefaßte Untereinheiten für i = 0, 1, 2 und 3 sind in Fig. 1 in Aufsicht dargestellt. Die Membranen 11, 12, 13, 14 brauchen nicht quadratisch zu sein, sondern können im Prinzip jede leicht herstellbare Form aufweisen. Sie können insbesondere rechteckig oder rund sein. Auch die zu einzelnen Untereinheiten gehörenden Membranen brauchen nicht auf engem Raum zusammengefaßt zu sein, sondern können über den Drucksensor verteilt sein. Es kommt nur auf die geeignete Zusammenschaltung (Parallelschaltung) jeweils so vieler Membranen gleicher Größe an, daß die Grundkapazität einer solchen Untereinheit jeweils gleich ist. Es können mehrere Untereinheiten mit derselben Membrangröße vorhanden sein, z. B. für einen Meßbereich mit besonderer Beanspruchung oder zur Angleichung der Stärke des Ausgangssignals. Die konkrete Ausgestaltung des erfindungsgemäßen Drucksensors kann daher an die jeweiligen Erfordernisse des Einzelfalles, insbesondere an das verwendete Herstellungsverfahren, angepaßt werden.

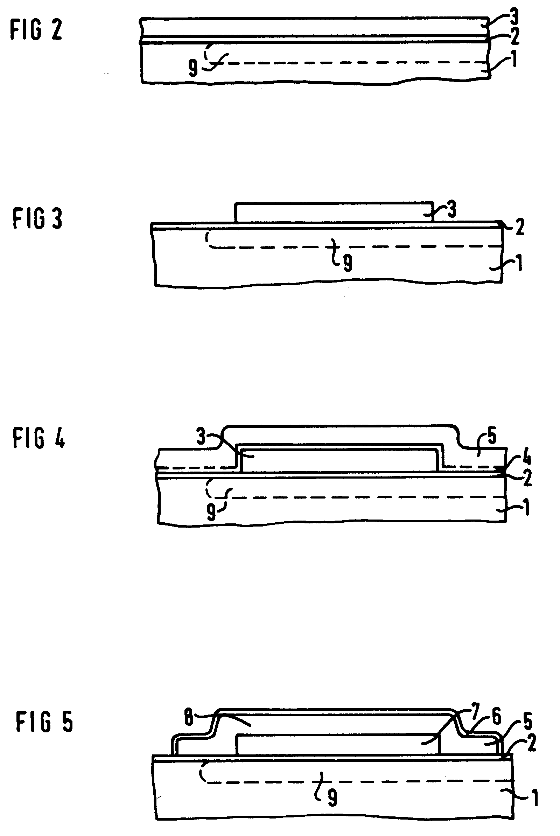

Ein solches Herstellungsverfahren wird im folgenden anhand der weiteren Figuren dargestellt. Besonders einfach gestaltet sich die Herstellung, wenn die elektrisch leitfähige Struktur, über die das Ansteuern und Ausmessen der einzelnen Membranen geschieht, in einem Substrat ausgebildet werden kann. Daher eignet sich insbesondere ein Substrat aus Halbleitermaterial, in dem die leitfähige Struktur durch Dotieren unter Verwendung von Maskentechnik hergestellt wird. Das Substrat kann z. B. Silizium sein und die Dotierung durch Ionenimplantation hergestellt sein. Auf dieses Substrat 1 mit dem dotierten Bereich 9 werden entsprechend Fig. 2 eine isolierende Schicht 2 und eine Hilfsschicht 3 abgeschieden. Die isolierende Schicht 2 dient der Isolation der Membranen von der leitfähigen Unterlage, entsprechend dem Dielektrikum eines Kondensators. Diese isolierende Schicht 2 kann z. B. ein Nitrid sein (Si₃N₄). Die Hilfsschicht 3 ist z. B. ein Oxid, wie z. B. SiO₂. Diese Hilfsschicht 3 wird strukturiert, so daß die verbleibenden Anteile jeweils etwa den Abmessungen der herzustellenden Membranen entsprechend (s. Fig. 3).

Danach wird gegebenenfalls eine weitere Hilfsschicht 4, z. B. aus demselben Material wie die Hilfsschicht 3, und darauf eine für die Membranen vorgesehene Schicht 5, die z. B. Polysilizium ist, aufgebracht. Die weitere Hilfsschicht 4 dient dazu, seitlich eines jeweils verbliebenen Anteiles der Hilfsschicht 3 streifenförmige Ausläufer durch Strukturierung herzustellen, die nach dem Entfernen unter der Polysiliziumschicht 5 Ätzkanäle bilden, durch die hindurch das Material der Hilfsschicht 3 entfernt werden kann, um so die Hohlräume unter den durch die Polysiliziumschicht 5 gebildeten Membranen herstellen zu können. Diese seitlichen Ausläufer für die Herstellung der Ätzkanäle können auch bereits bei der Strukturierung aus der Hilfsschicht 3 hergestellt werden. Die weitere Hilfsschicht 4 kann dann weggelassen werden. Die Polysiliziumschicht 5 wird strukturiert, so daß von dieser Polysiliziumschicht 5 für die einzelnen Membranen vorgesehene Anteile verbleiben. Diese Anteile können z. B. quadratisch und rasterförmig angeordnet sein, wie z. B. in der Matrix der Fig. 1 dargestellt ist. Die Ränder dieser Anteile der Polysiliziumschicht 5 ruhen jeweils auf der isolierenden Schicht 2, wobei diese Verbindung zwischen der Polysiliziumschicht 5 und der isolierenden Schicht 2 stellenweise durch die streifenförmigen Ausläufer der Hilfsschicht 3 bzw. der weiteren Hilfsschicht 4 unterbrochen ist. In einem Ätzprozeß, z. B. naßchemisch unter Verwendung von HF, werden diese streifenförmigen Ausläufer aus z. B. SiO₂ selektiv zu dem Material der isolierenden Schicht 2 (z. B. Si₃N₄) und dem Material der Schicht 5 (z. B. Polysilizium) entfernt. Dabei entstehen Ätzkanäle, d. h. kanalartige Öffnungen zwischen der isolierenden Schicht 2 und der Polysiliziumschicht 5, die den jeweils verbleibenden Anteil der Hilfsschicht 3 unter der Polysiliziumschicht 5 von außen zugänglich machen. Durch diese Ätzkanäle erfolgt bei Fortsetzung des Ätzprozesses ein Ätzangriff auf das Material (SiO₂) der Hilfsschicht 3. Die Reste der Hilfsschicht 3 werden daher vollständig entfernt. Dabei entstehen Hohlräume unter der Polysiliziumschicht 5, die jeweils von einem zusammenhängenden Anteil der Polysiliziumschicht 5 überspannt werden. Die Ränder sind wie erwähnt jeweils mit der Grundlage (die isolierende Schicht 2) verbunden, wenn die Ätzkanäle z. B. durch eine versiegelnde Oxidation verschlossen werden. Die Polysiliziumschicht wird in einem der Arbeitsgänge z. B. durch Ionenimplantation elektrisch leitend dotiert und bildet daher jeweils die Gegenelektrode zur darunterliegenden Elektrode (dotierter Bereich 9) im Substrat. In Fig. 4 sind die seitlichen Anteile der weiteren Hilfsschicht 4 gestrichelt gezeichnet, um anzudeuten, daß in diesem Bereich nur die für die Ätzkanäle vorgesehenen streifenförmigen Ausläufer von dieser weiteren Hilfsschicht 4 vorhanden sind. Wie in Fig. 5 dargestellt, kann die Membran 8, die durch jeweils einen Anteil der Polysiliziumschicht 5 gebildet wird, mit einer Passivierungsschicht 6 bedeckt werden.

Die durch die einzelnen Membranen gebildeten Sensoren besitzen in Gestalt des Siliziumsubstrates einen eingebauten Überdruckschutz und weisen eine Überdruckkapazität von mehreren Größenordnungen des nominellen Meßbereichs auf. Jeder einzelne Sensor zeigt auch nach einer Druckbeanspruchung, bei der die betreffende Membran gegen das Substrat gedrückt wurde, keine mechanische Hysterese und keine Nullpunktverschiebung. Diese Eigenschaften der Membranen und die Möglichkeit, mit Hilfe der Halbleitertechnologie auf einem Siliziumchip gleichzeitig mehrere Einzelsensoren zusammen mit der zugehörigen Auswerteelektronik herzustellen, ermöglichen eine einfache Fertigung des erfindungsgemäßen Drucksensors. Jede der für verschiedene Meßbereiche zuständigen Untereinheiten ist mit einem temperaturkompensierten Verstärker verbunden, dessen Ausgangssignal linearisiert wird. Diese jeweilige elektronische Schaltung kann wie erwähnt in dem Halbleiterbauelement, d. h. z. B. auf dem Siliziumsubstrat integriert sein.

Da die Gesamtkapazität jeder Untereinheit wegen der Parallelschaltung der Membranen jeweils gleich groß ist, kann für alle Untereinheiten die gleiche Verstärkerschaltung eingesetzt werden. Die nach der Verstärkung und Linearisierung erhaltenen Signale werden dann einer Auswerteschaltung zugeführt, die feststellt, welche der Untereinheiten gerade in dem für sie zulässigen Meßbereich arbeitet und ein entsprechendes Ausgangssignal, das aus dieser Untereinheit herstammt, bereitstellt. Ggf. kann das analoge Ausgangssignal dieser Auswerteschaltung durch einen nachgeschalteten AD-Wandler digitalisiert werden. Da der erfindungsgemäße Drucksensor nur ein Ausgangssignal liefert, kann der externe Schaltungsaufwand auf ein Minimum reduziert werden.

## Patentansprüche

1. Drucksensor, bei dem eine Matrix von Membranen (11, 12, 13, 14) vorhanden ist, deren variable elektrische Kapazität bezüglich einer Fläche, über der sie angebracht sind, mittels einer Struktur elektrischer Leiter an dieser Fläche gemessen wird,
bei dem diese Membranen in mindestens zwei unterschiedlichen Größen vorhanden sind und
bei dem jeweils so viele Membranen derselben Größe durch diese Struktur elektrischer Leiter zu einer Untereinheit verbunden werden, daß die Summe der kapazitiv wirksamen Flächen der Membranen für jede dieser Untereinheiten gleich groß ist.

2. Druckmesser nach Anspruch 1,
bei dem die Membranen (11, 12, 13, 14) mit ihren Rändern derart auf einer elektrisch isolierenden Schicht (2) auf einem Substrat (1) befestigt sind, daß zwischen jeder Membran und dieser isolierenden Schicht ein Hohlraum (7) vorhanden ist.

3. Drucksensor nach Anspruch 2,
bei dem das Substrat an der den Membranen zugewandten Oberseite für die Ausbildung der Struktur elektrischer Leiter dotiert ist.

4. Drucksensor nach Anspruch 2 oder 3,
bei dem das Substrat Silizium ist und die Membranen Polysilizium sind.
